# EUROPEAN PATENT APPLICATION

(11) **EP 3 869 865 A1**
(43) Date of publication of application: **25.08.2021**
(21) Application number: 18937564.5
(22) Date of filing: 23.10.2018
(51) Int. Cl.: H04W 36/08, H04W 76/27, H04W 12/08

(54) **PROCESSING METHOD FOR SECURITY ALGORITHM, DEVICE AND TERMINAL**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); YANG, Ning, Dongguan, Guangdong 523860 (CN)
(74) Representative: Mewburn Ellis LLP
(86) International application number: PCT/CN2018/111511
(87) International publication number: WO 2020/082247

(57) **Abstract**

Implementations of the present disclosure provide a processing method and apparatus for a security algorithm and a terminal. The method includes the following. A terminal performs cell search and selects a cell supporting a first security algorithm as a target cell from found cells, where the first security algorithm is a security algorithm used by the terminal before RRC connection re-establishment or RRC connection recovery. The terminal performs an RRC connection re-establishment procedure or an RRC connection recovery procedure between the terminal and the target cell.

## Description

### TECHNICAL FIELD

Implementations of the present disclosure relate to the technical field of mobile communications, and in particular, to a processing method and apparatus for a security algorithm and a terminal.

### BACKGROUND

In a radio resource control (RRC) connection re-establishment procedure, a terminal transmits an RRC connection re-establishment request message to a target cell, and a network side transmits an RRC connection re-establishment message to the terminal. The RRC connection re-establishment message has been subjected to integrity protection. An algorithm for the integrity protection is an integrity-protection algorithm of an original cell before the terminal performs RRC connection re-establishment. If the target cell does not support the integrity-protection algorithm of the original cell, a target base station transmits an RRC connection establishment message to the terminal to fall back, which results in RRC connection re-establishment failure.

### SUMMARY

Implementations of the present disclosure provide a processing method and apparatus for a security algorithm and a terminal.

A processing method for a security algorithm provided in an implementation of the present disclosure includes the following. A terminal performs cell search and selects a cell supporting a first security algorithm as a target cell from found cells, where the first security algorithm is a security algorithm used by the terminal before RRC connection re-establishment or RRC connection recovery. The terminal performs an RRC connection re-establishment procedure or an RRC connection recovery procedure between the terminal and the target cell.

A processing method for a security algorithm provided in an implementation of the present disclosure includes the following. A terminal performs cell search and selects a target cell. The terminal transmits an RRC connection re-establishment request message to the target cell. The terminal receives an RRC connection re-establishment message from the target cell, and determines whether the RRC connection re-establishment message carries configuration information of a second security algorithm. The terminal transmits an RRC connection recovery completion message to the target cell via the second security algorithm, in response to the RRC connection re-establishment message carrying the configuration information of the second security algorithm.

A processing apparatus for a security algorithm provided in an implementation of the present disclosure includes a searching unit and an RRC unit. The searching unit is configured to perform cell search and select a cell supporting a first security algorithm as a target cell from found cells, where the first security algorithm is a security algorithm used by a terminal before RRC connection re-establishment or RRC connection recovery. The RRC unit is configured to perform an RRC connection re-establishment procedure or an RRC connection recovery procedure between the terminal and the target cell.

A processing apparatus for a security algorithm provided in an implementation of the present disclosure includes a searching unit and an RRC unit. The searching unit is configured to perform cell search and select a target cell. The RRC unit is configured to transmit an RRC connection re-establishment request message to the target cell, receive an RRC connection re-establishment message from the target cell, determine whether the RRC connection re-establishment message carries configuration information of a second security algorithm, and transmit an RRC connection recovery completion message to the target cell via the second security algorithm, in response to the RRC connection re-establishment message carrying the configuration information of the second security algorithm.

A terminal provided in an implementation of the present disclosure includes a processor and a memory. The memory stores at least one computer program. The processor is configured to invoke and run the at least one computer program stored in the memory to execute the abovementioned processing method for a security algorithm.

A chip provided in an implementation of the present disclosure is configured to implement the abovementioned processing method for a security algorithm.

In an implementation, the chip includes a processor configured to invoke and run at least one computer program in a memory to enable a device equipped with the chip to execute the abovementioned processing method for a security algorithm.

A computer-readable storage medium provided in an implementation of the present disclosure is configured to store at least one computer program. The at least one computer program enables a computer to execute the abovementioned processing method for a security algorithm.

A computer program product provided in an implementation of the present disclosure includes at least one computer program instruction. The computer program instruction enables a computer to execute the abovementioned processing method for a security algorithm.

A computer program provided in an implementation of the present disclosure, when running on a computer, enables the computer to execute the abovementioned processing method for a security algorithm.

According to the above technical solution, in the RRC connection re-establishment procedure or the RRC connection recovery procedure, the terminal selects the cell that supports the security algorithm used by the terminal before the RRC connection re-establishment or the RRC connection recovery to serve as the target cell for the RRC connection re-establishment or RRC connection recovery, thereby avoiding falling back of RRC connection establishment and ensuring successful RRC connection re-establishment or successful RRC connection recovery, and thus RRC connection can be restored as soon as possible, and service interruption delay can be shortened. On the other hand, a network side determines whether to perform security algorithm change for the RRC connection re-establishment according to the security algorithm currently configured by the terminal and a security algorithm supporting ability of the network side, so as to prevent the RRC connection establishment from falling back and ensure the successful RRC connection re-establishment, and thus the RRC connection can be restored as soon as possible, and the service interruption delay can be shortened.

### BRIEF DESCRIPTION OF THE DRAWINGS

The accompanying drawings described herein are used to provide a further understanding of the present disclosure and constitute a part of the present disclosure. The exemplary implementations and descriptions of the present disclosure are used to explain the present disclosure, and do not constitute an improper limitation of the present disclosure. The accompanying drawings are as follows.
FIG. 1 is a schematic diagram illustrating a communication system architecture according to an implementation of the present disclosure.
FIG. 2 is a first schematic flow chart illustrating a processing method for a security algorithm according to an implementation of the present disclosure.
FIG. 3 is a second schematic flow chart illustrating a processing method for a security algorithm according to an implementation of the present disclosure.
FIG. 4 is a first schematic structural diagram illustrating a processing apparatus for a security algorithm according to an implementation of the present disclosure.
FIG. 5 is a second schematic structural diagram illustrating a processing apparatus for a security algorithm according to an implementation of the present disclosure.
FIG. 6 is a schematic structural diagram illustrating a communication device according to an implementation of the present disclosure.
FIG. 7 is a schematic structural diagram illustrating a chip according to an implementation of the present disclosure.
FIG. 8 is a schematic block diagram illustrating a communication system according to an implementation of the present disclosure.

### DETAILED DESCRIPTION

The technical solutions in implementations of the present disclosure will be described in the following with reference to the accompanying drawings in the implementations of the present disclosure. Apparently, the described implementations are merely a part of rather than all the implementations of the present disclosure. All other implementations obtained by those of ordinary skill in the art based on the implementations of the present disclosure without creative efforts are within the scope of the present disclosure.

The technical solutions in the implementations of the present disclosure can be applied to various communication systems, such as a global system of mobile communication (GSM), a code division multiple access (CDMA) system, a wideband code division multiple access (WCDMA) system, general packet radio service (GPRS), a long term evolution (LTE) system, an LTE frequency division duplex (FDD) system, an LTE time division duplex (TDD) system, a universal mobile telecommunication system (UMTS), a worldwide interoperability for microwave access (WiMAX) communication system, a fifth generation (5G) system, or the like.

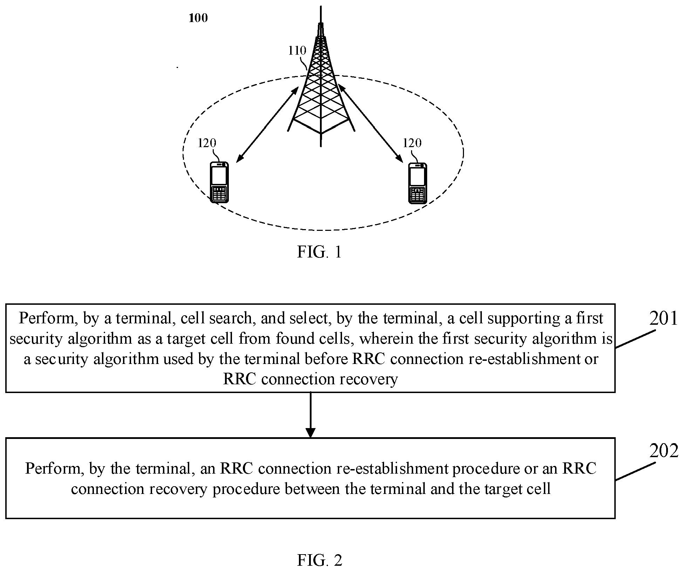

For example, a communication system 100 in an implementation of the present disclosure is illustrated in FIG. 1. The communication system 100 may include a network device 110. The network device 110 can communicate with a terminal 120 (or called a communication terminal or a terminal). The network device 110 can provide communication coverage for a specific geographic area and communicate with terminals in the coverage area. In an implementation, the network device 110 may be a base transceiver station (BTS) in the GSM or CDMA system, a base station (NodeB, NB) in the WCDMA system, an evolutional base station (evolutional node B, eNB or eNodeB) in the LTE system, or a wireless controller in a cloud radio access network (CRAN). In an implementation, the network device 110 may be a mobile switch center, a relay station, an access point, a vehicle-mounted device, a wearable device, a hub, a switch, a network bridge, a router, a network device in the 5G network, a network device in a future evolution public land mobile network (PLMN), or the like

The communication system 100 further includes at least one terminal 120 in the coverage area of the network device 110. The "terminal" used herein may include but is not limited to a device coupled via a wired line, and/or other data connection /network, and/or a wireless interface, and/or a device communicating with another terminal device to receive/transmit communication signals, and/or an Internet of Things (IoT) device. Examples of the wired line may include, but are not limited to, a public switched telephone network (PSTN), a digital subscriber line (DSL), a digital cable, and a direct connection cable. Examples of the wireless interface may include, but are not limited to, a wireless interface for a cellular network, a WLAN, a digital television network (such as a digital video broadcasting-handheld (DVB-H) network), a satellite network, and an amplitude modulation-frequency modulation (AM-FM) broadcast transmitter. A terminal configured to communicate via the wireless interface may be called a "wireless communication terminal", a "wireless terminal", or a "mobile terminal". Examples of a mobile terminal may include, but are not limited to, a satellite or cellular telephone, a personal communication system (PCS) terminal integrated with functions of cellular radio telephone, data processing, fax, and data communication, a personal digital assistant (PDA) equipped with radio telephone, pager, Internet/Intranet access, web browsing, a notebook, a calendar, and/or a global positioning system (GPS) receiver, and a conventional laptop and/or a handheld receiver or other electronic devices equipped with a radio telephone transceiver. The terminal may refer to an access terminal, user equipment (UE), a user unit, a user station, a mobile station, a remote station, a remote terminal, a mobile device, a user terminal, a terminal, a wireless communication device, a user agent, or a user device. The access terminal may be a cellular phone, a cordless phone, a session initiation protocol (SIP) phone, a wireless local loop (WLL) station, a PDA, a handheld device with a wireless communication function, a computing device or other processing devices coupled with wireless modems, a vehicle-mounted device, a wearable device, a terminal device in the 5G network or the future evolution PLMN, or the like.

In an implementation, the terminals 120 may communication with each other through device to device (D2D) communication.

In an implementation, the 5G system or 5G network may also be referred to as a new radio (NR) system or an NR network.

As an example, FIG. 1 illustrates a network device and two terminals. In an implementation, the communication system 100 may include multiple network devices, and in a coverage area of each network device, there can be other numbers of terminals, which is not limited herein.

In an implementation, the communication system 100 may further include a network controller, a mobility management entity (MME), or other network entities, which is not limited herein.

It is to be understood that in the implementation of the present disclosure, in a network/system, a device with a communication function can be called a communication device. The communication system 100 illustrated in FIG. 1 is taken as an example. The communication devices may include the network device 110 and the terminal 120 that have a communication function. The network device 110 and the terminal 120 may be the devices described above, which is not repeated herein. The communication devices may further include other devices in the communication system 100, such as the network controller, the MME, or other network entities, which is not limited herein.

It is to be understood that the terms "system" and "network" in the specification are often used interchangeably in the specification. The term "and/or" in the specification is only a description of an association relationship of associated objects, which means that there may be three relationships, for example, A and/or B, which may mean that: A exists alone, A and B both exist, and B exists alone. In addition, the character "/" in the specification generally means that an object before "/" and an object after "/" are in an "or" relationship.

In order to meet people's pursuit of speed, delay, high-speed mobility, and energy efficiency of services, as well as diversity and complexity of services in future life, the 3rd generation partnership project (3GPP) international organization for standards developed 5G mobile communication technology.

Main application scenarios of 5G are: enhanced mobile broadband (eMBB), ultra reliability and low latency communication (URLLC), massive machine type communication (mMTC).

The technical solutions of the implementations of the present disclosure are mainly applied to a 5G mobile communication system. Of course, the technical solutions of the implementations of the present disclosure are not limited to the 5G mobile communication system, and can also be applied to other types of mobile communication systems. The following describes the main application scenarios in the 5G mobile communication system.
1) eMBB scenario: eMBB aims at that users can obtain multimedia content, services and data, and service requirements of eMBB are growing rapidly. Since eMBB may be deployed in different scenarios, such as indoors, urban areas, rural areas, etc., service capabilities and requirements of eMBB in different scenarios are also quite different, so services need to be analyzed in combination with specific deployment scenarios.
2) URLLC scenario: typical applications of URLLC include: industrial automation, power automation, telemedicine operations, traffic safety assurance, etc.
3) mMTC scenario: typical characteristics of URLLC include: high connection density, small data volume, delay-insensitive services, low-cost and long service life of modules, etc.

An air interface of the 5G mobile communication technology is called NR. In the early deployment of NR, complete NR coverage is difficult to achieve. Therefore, typical network coverage is a combination of LTE coverage and NR coverage. Moreover, a large amount of LTE deployment is below 6GHz, and there are a small number of spectrums that are below 6GHz and can be used for 5G. Therefore, NR needs to study spectrum applications above 6GHz. However, high frequency band coverage is limited and signal fading is fast. In addition, in order to protect early investment of mobile operators in LTE, a tight interworking mode between LTE and NR is proposed. Of course, NR cells can also be deployed independently.

FIG. 2 is a first schematic flow chart illustrating a processing method for a security algorithm according to an implementation of the present disclosure. As illustrated in FIG. 2, the processing method for the security algorithm includes the following.

At block 201, a terminal performs cell search, and selects, from found cells, a cell supporting a first security algorithm as a target cell, where the first security algorithm is a security algorithm used by the terminal before radio resource control (RRC) connection re-establishment or RRC connection recovery.

In an implementation of the present disclosure, the terminal may be any device capable of communicating with a network, such as a mobile phone, a tablet computer, a vehicle-mounted terminal, a notebook, etc.

In an implementation of the present disclosure, if the terminal in RRC connection status encounters a radio link failure (RLF), an integrity-protection verification failure, an RRC connection reconfiguration release, or a handover failure, the terminal performs the cell search and initiates an RRC connection re-establishment procedure or RRC connection recovery procedure in an appropriate cell.

In an implementation of the present disclosure, for each of at least one cell, the terminal obtains a security algorithm list supported by the cell, and the security algorithm list contains at least one security algorithm supported by the cell. In an implementation, a cell can broadcast a security algorithm list of access stratum (AS) supported by the cell, and for each of the at least one cell, the terminal obtains the security algorithm list supported by the cell from a system broadcast message of the cell. When the terminal performs the cell search, a cell that supports the first security algorithm is selected as the target cell from the found cells, where the first security algorithm is the security algorithm used by the terminal before the RRC connection re-establishment or the RRC connection recovery.

For example, the security algorithm used by the terminal before the RRC connection re-establishment or RRC connection recovery is security algorithm 1 of cell A (original cell). In response to an RRC connection re-establishment event or RRC connection recovery event, the terminal performs the cell search. Three cells found by the cell are respectively cell 1, cell 2, and cell 3, where cell 1 and cell 2 support security algorithm 1, and cell 3 does not support security algorithm 1. A security algorithm list supported by each cell can be obtained from a system broadcast message of each cell. The terminal selects an appropriate cell from cell 1 and cell 2, for example, cell 1 with the highest signal quality is selected as the target cell. Herein, the target cell refers to a target cell for the RRC connection re-establishment or RRC connection recovery.

At block 202, perform the RRC connection re-establishment procedure or RRC connection recovery procedure between the terminal and the target cell.

The technical solution of the implementation of the present disclosure will be described in detail below in conjunction with the RRC connection re-establishment procedure and the RRC connection recovery procedure.

### First solution: RRC connection re-establishment procedure

1) The terminal transmits an RRC connection re-establishment request message to the target cell.
   In an implementation, the terminal transmits the RRC connection re-establishment request message to the target cell through signaling radio bearer 0 (SRB0). Upon reception of the RRC connection re-establishment request message, the target cell obtains UE context of the terminal from the original cell, restores SRB 1, and updates a secret key.
2) The terminal receives an RRC connection re-establishment message from the target cell, where the RRC connection re-establishment message has been subjected to integrity protection performed with the first security algorithm and the secret key updated by the target cell.
   In an implementation, the target cell transmits the RRC connection re-establishment message to the terminal. The RRC connection re-establishment message is carried on SRB1 and has been subjected to the integrity protection. The RRC connection re-establishment message carries first next hop chaining count (NCC) information (i.e., key index information), and the first NCC information is used by the terminal to update the secret key. Since the target cell supports the first security algorithm used by the terminal before the RRC connection re-establishment, the integrity protection on the RRC connection re-establishment message can be performed with the first security algorithm.
3) The terminal transmits an RRC connection re-establishment completion message to the target cell.

In an implementation, upon reception of the RRC connection re-establishment message from the target cell, the terminal updates the secret key according to the first NCC information in the RRC connection re-establishment message, and transmits the RRC connection re-establishment completion message to the target cell. The terminal performs integrity protection and encryption on the RRC connection re-establishment completion message with the first security algorithm and the secret key updated by the terminal.

### Second solution: RRC connection recovery procedure

1) The terminal transmits an RRC connection recovery request message to the target cell.
   In an implementation, the terminal transmits the RRC connection recovery request message to the target cell through SRB0. Upon reception of the RRC connection recovery request message, the target cell obtains UE context of the terminal from the original cell, restores SRB 1, and updates a secret key.
2) The terminal receives an RRC connection recovery message from the target cell, where the RRC connection recovery message has been subjected to integrity protection and encryption performed with the first security algorithm and the secret key updated by the target cell.
   In an implementation, the target cell transmits the RRC connection recovery message to the terminal. The RRC connection recovery message is carried on SRB1 and has been subjected to the integrity protection and encryption. The RRC connection recovery message carries first NCC information (i.e., key index information), and the first NCC information is used by the terminal to update the secret key. Since the target cell supports the first security algorithm used by the terminal before the RRC connection recovery, the integrity protection and encryption on the RRC connection recovery message can be performed with the first security algorithm and the secret key updated by the target cell.
3) The terminal transmits an RRC connection recovery completion message to the target cell.

In an implementation, upon reception of the RRC connection recovery message from the target cell, the terminal updates the secret key according to the first NCC information in the RRC connection recovery message, and transmits the RRC connection recovery completion message to the target cell. The terminal performs integrity protection and encryption on the RRC connection recovery completion message with the first security algorithm and the secret key updated by the terminal.

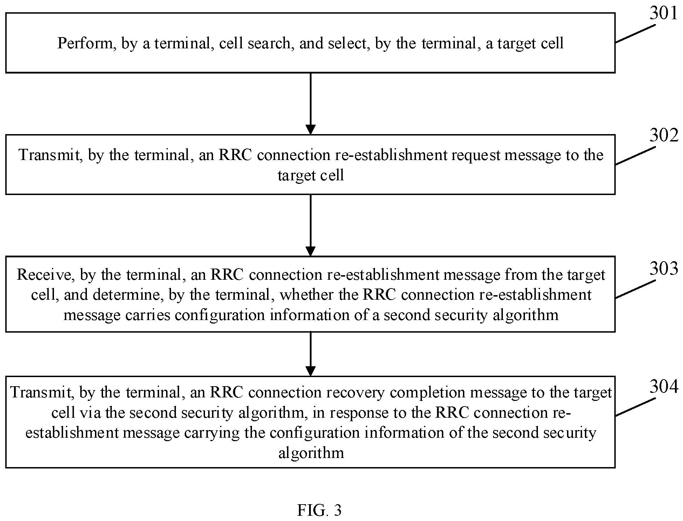

FIG. 3 is a second schematic flow chart illustrating a processing method for a security algorithm according to an implementation of the present disclosure. As illustrated in FIG. 3, the processing method for the security algorithm includes the following.

At block 301, a terminal performs cell search and selects a target cell.

In an implementation of the present disclosure, the terminal may be any device capable of communicating with a network, such as a mobile phone, a tablet computer, a vehicle-mounted terminal, a notebook, etc.

In an implementation of the present disclosure, if the terminal in RRC connection status encounters an RLF, an integrity-protection verification failure, an RRC connection reconfiguration release, or a handover failure, the terminal performs the cell search and initiates an RRC connection re-establishment procedure in an appropriate cell (i.e., the target cell).

At block 302, the terminal transmits an RRC connection re-establishment request message to the target cell.

In an implementation, the terminal transmits the RRC connection re-establishment request message to the target cell through SRB0. Upon reception of the RRC connection re-establishment request message, the target cell obtains UE context of the terminal from the original cell, restores SRB 1, obtains configuration information of a first security algorithm used by the terminal before RRC connection re-establishment, and updates a secret key.

At block 303, the terminal receives an RRC connection re-establishment message from the target cell and determines whether the RRC connection re-establishment message carries configuration information of a second security algorithm.

In an implementation, the target cell transmits the RRC connection re-establishment message to the terminal. The RRC connection re-establishment message is carried on SRB1 and has been subjected to integrity protection. The RRC connection re-establishment message carries first NCC information (i.e., secret index information), and the first NCC information is used by the terminal to update the secret key.

In an implementation of the present disclosure, a security algorithm list supported by the target cell contains at least one security algorithm. If the security algorithm list contains the first security algorithm, it indicates that the target cell supports the first security algorithm. If the security algorithm list does not contain the first security algorithm, it indicates that the target cell does not support the first security algorithm. The following will describe the technical solution of the present disclosure in detail with reference to a condition where the target cell supports the first security algorithm and a condition where the target cell does not support the first security algorithm
.1) The target cell supports the first security algorithm.

If the target cell does not support the first security algorithm, the target cell makes the RRC connection re-establishment message carry the configuration information of the second security algorithm. The first security algorithm is a security algorithm used by the terminal before the RRC connection re-establishment, and the second security algorithm is a security algorithm supported by the target cell.

Herein, if the target cell does not support the security algorithm (i.e., the first security algorithm of the original cell) used by the terminal before the RRC connection re-establishment, the target cell changes to use the second security algorithm (i.e., the second security algorithm of the target cell).
2) The target cell does not support the first security algorithm.

If the target cell supports the first security algorithm, the target cell makes the RRC connection re-establishment message not carry the configuration information of the second security algorithm or carry the configuration information of the second security algorithm. The first security algorithm is the security algorithm used by the terminal before the RRC connection re-establishment, and the second security algorithm is the security algorithm supported by the target cell.

Herein, if the target cell supports the security algorithm (i.e., the first security algorithm of the original cell) used by the terminal before the RRC connection re-establishment, the target cell can choose to not perform security algorithm change or can choose to perform the security algorithm change. If the target cell selects to perform the security algorithm change, the target cell changes to use the second security algorithm supported by the target cell.

In an implementation of the present disclosure, if the target cell determines to use the second security algorithm, the target cell makes the RRC connection re-establishment message carry the configuration information of the second security algorithm. Furthermore, if the RRC connection re-establishment message carries the configuration information of the second security algorithm, it indicates that the RRC connection re-establishment message has been subjected to the integrity protection performed with the second security algorithm and the secret key updated by the target cell.

At block 304, in response to the RRC connection re-establishment message carrying the configuration information of the second security algorithm, the terminal transmits an RRC connection recovery completion message to the target cell via the second security algorithm.

In an implementation of the present disclosure, the RRC connection re-establishment message carries the first NCC information, and the first NCC information is used by the terminal to update the secret key. Upon reception of the RRC connection re-establishment message from the target cell, the terminal updates the secret key according to the first NCC information in the RRC connection re-establishment message, and transmits the RRC connection re-establishment completion message to the target cell. If the RRC connection re-establishment message carries the configuration information of the second security algorithm, the terminal performs integrity protection and security on the RRC connection re-establishment completion message with the second security algorithm and the secret key updated by the terminal.

In an implementation of the present disclosure, if the RRC connection re-establishment message does not carry the configuration information of the second security algorithm, the terminal transmits the RRC connection recovery completion message to the target cell via the first security algorithm, and the first security algorithm is the security algorithm used by the terminal before the RRC connection re-establishment. The RRC connection re-establishment message carries the first NCC information, and the first NCC information is used by the terminal to update the secret key. Upon reception of the RRC connection re-establishment message from the target cell, the terminal updates the secret key according to the first NCC information in the RRC connection re-establishment message, and transmits the RRC connection re-establishment completion message to the target cell. If the RRC connection re-establishment message does not carry the configuration information of the second security algorithm, the terminal performs the integrity protection and encryption on the RRC connection re-establishment completion message with the first security algorithm and the secret key updated by the terminal.

For example, the security algorithm used by the terminal before the RRC connection re-establishment is security algorithm *A* (that is, security algorithm *A* of the original cell). The terminal initiates an RRC connection re-establishment procedure in response to an RRC connection re-establishment event. In the implementation, the terminal performs the cell search. In response to finding the target cell, the terminal transmits the RRC connection re-establishment request message to the target cell. Upon reception of the RRC connection re-establishment request message, the target cell obtains from the original cell UE context of the terminal and security algorithm *A* used by the terminal. The target cell determines whether the target cell supports security algorithm *A.* If the target cell does not support security algorithm A, the target cell changes to use security algorithm *B* rather than security algorithm *A,* where security algorithm B is a security algorithm supported by the target cell. If the target cell supports security algorithm *A,* the target cell can change to use security algorithm *B* rather than security algorithm *A,* or choose not to perform security algorithm change (that is, still use security algorithm *A).* If the target cell changes to use security algorithm *B* rather than security algorithm *A,* the target cell makes the RRC connection re-establishment message transmitted to the terminal carry configuration information of security algorithm *B,* and performs the integrity protection on the RRC connection re-establishment message with security algorithm *B* and the secret key updated by the target cell. If the target cell does not perform the security algorithm change, the target cell makes the RRC connection re-establishment message transmitted to the terminal not carry configuration information of a security algorithm, and performs the integrity protection on the RRC connection re-establishment message with the secret key updated by the target cell and security algorithm *A.* Upon reception of the RRC connection re-establishment message, in case that the RRC connection re-establishment message carries the configuration information of security algorithm *B,* the terminal uses security algorithm *B* and the secret key updated by the terminal to perform integrity protection verification on the RRC connection re-establishment message. If the verification passes, the terminal uses security algorithm *B* and the secret key updated by the terminal, and then replies to the target cell with the RRC connection re-establishment completion message. The terminal performs encryption and integrity protection on the RRC connection re-establishment completion message with security algorithm *B* and the secret key updated by the terminal. In case that the RRC connection re-establishment message does not carry configuration information of a security algorithm, the terminal uses security algorithm *A* and the secret key updated by the terminal to perform the integrity protection verification on the RRC connection re-establishment message, and further uses security algorithm *A* to reply to the target cell with the RRC connection re-establishment completion message. That is, the encryption and integrity protection on the RRC connection re-establishment completion message are performed with security algorithm A and the secret key updated by the terminal.

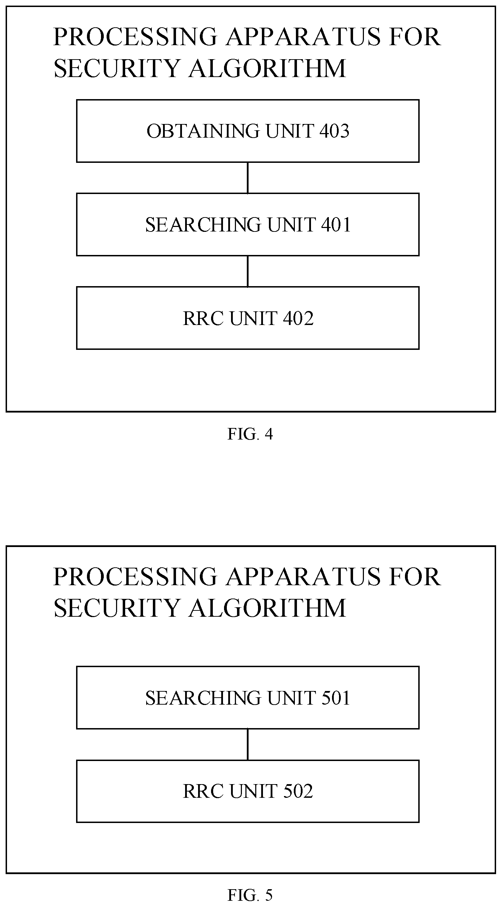

FIG. 4 is a first schematic structural diagram illustrating a processing apparatus for a security algorithm according to an implementation of the present disclosure. As illustrated in FIG. 4, the apparatus includes a searching unit 401 and an RRC unit 402.

The searching unit 401 is configured to perform cell search and select a cell supporting a first security algorithm as a target cell from found cells, where the first security algorithm is a security algorithm used by a terminal before RRC connection re-establishment or RRC connection recovery.

The RRC unit 402 is configured to perform an RRC connection re-establishment procedure or an RRC connection recovery procedure between the terminal and the target cell.

In an implementation, the apparatus further includes an obtaining unit 403 configured to obtain, for each of at least one cell, a security algorithm list supported by the cell from a system broadcast message of the cell, where the security algorithm list contains at least one security algorithm support by the cell.

In an implementation, the RRC unit 402 is configured to transmit an RRC connection re-establishment request message to the target cell, and receive an RRC connection re-establishment message from the target cell, where the RRC connection re-establishment message has been subjected to integrity protection performed with the first security algorithm and a secret key updated by the target cell. The RRC unit 402 is further configured to transmit an RRC connection re-establishment completion message to the target cell.

In an implementation, the RRC connection re-establishment message carries first NCC information, where the first NCC information is used by the terminal to update a secret key. Integrity protection and encryption on the RRC connection re-establishment completion message are performed with the first security algorithm and a secret key updated by the terminal.

In an implementation, the RRC unit 402 is configured to transmit an RRC connection recovery request message to the target cell, and receive an RRC connection recovery message from the target cell, where the RRC connection recovery message has been subjected to integrity protection and encryption performed with the first security algorithm and the secret key updated by the target cell. The RRC unit 402 is further configured to transmit an RRC connection recovery completion message to the target cell.

In an implementation, the RRC connection recovery message carries second NCC information, where the second NCC information is used by the terminal to update the secret key. Integrity protection and encryption on the RRC connection recovery completion message is performed with the first security algorithm and the secret key updated by the terminal.

Those skilled in the art should understand that relevant description of the aforementioned processing apparatus for a security algorithm in the implementation of the present disclosure can be understood with reference to relevant description of the processing method for a security algorithm in the implementation of the present disclosure.

FIG. 5 is a second schematic structural diagram illustrating a processing apparatus for a security algorithm according to an implementation of the present disclosure. As illustrated in FIG. 5, the apparatus includes a searching unit 501 and an RRC unit 502.

The searching unit 501 is configured to perform cell search and select a target cell.

The RRC unit 502 is configured to transmit an RRC connection re-establishment request message to the target cell, receive an RRC connection re-establishment message from the target cell, determine whether the RRC connection re-establishment message carries configuration information of a second security algorithm, and transmit an RRC connection recovery completion message to the target cell via the second security algorithm, in response to the RRC connection re-establishment message carrying the configuration information of the second security algorithm.

In an implementation, in case that the target cell does not support the first security algorithm, the target cell makes the RRC connection re-establishment message carry the configuration information of the second security algorithm. The first security algorithm is a security algorithm used by the terminal before RRC connection re-establishment, and the second security algorithm is a security algorithm supported by the target cell.

In an implementation, in case that the target cell supports the first security algorithm, the target cell makes the RRC connection re-establishment message not carry the configuration information of the second security algorithm or carry the configuration information of the second security algorithm. The first security algorithm is the security algorithm used by the terminal before the RRC connection re-establishment, and the second security algorithm is the security algorithm supported by the target cell.

In an implementation, in case that the RRC connection re-establishment message carries the configuration information of the second security algorithm, it indicates that the RRC connection re-establishment message has been subjected to integrity protection performed with the second security algorithm and a secret key updated by the target cell.

In an implementation, the RRC connection re-establishment message carries first NCC information, where the first NCC information is used by the terminal to update a secret key. Integrity protection and encryption on the RRC connection re-establishment completion message are performed with the second security algorithm and the secret key updated by the terminal, in response to the RRC connection re-establishment message carrying the configuration information of the second security algorithm.

In an implementation, the RRC unit 502 is configured to transmit the RRC connection recovery completion message to the target cell via the first security algorithm, in response to the RRC connection re-establishment message not carrying the configuration information of the second security algorithm, where the first security algorithm is the security algorithm used by the terminal before the RRC connection re-establishment.

In an implementation, the RRC connection re-establishment message carries the first NCC information, where the first NCC information is used by the terminal to update the secret key. The integrity protection and encryption on the RRC connection re-establishment completion message are performed with the first security algorithm and the secret key updated by the terminal, in response to the RRC connection re-establishment message not carrying the configuration information of the second security algorithm.

Those skilled in the art should understand that relevant description of the aforementioned processing apparatus for a security algorithm in the implementation of the present disclosure can be understood with reference to relevant description of the processing method for a security algorithm in the implementation of the present disclosure.

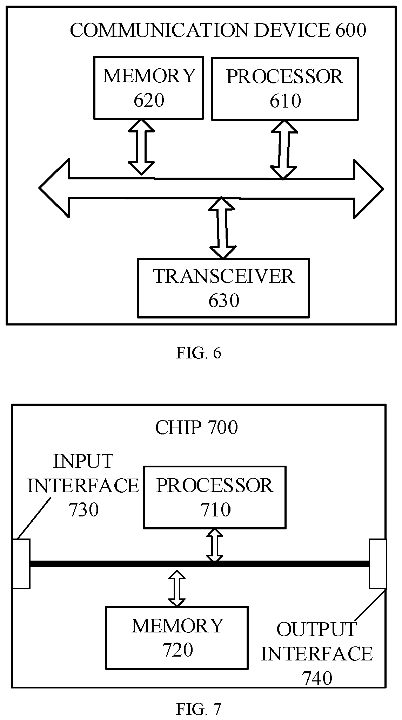

FIG. 6 is a schematic structural view illustrating a communication device 600 according to an implementation of the present disclosure. The communication device 600 may be a terminal. The communication device 600 illustrated in FIG. 6 includes a processor 610. The processor 610 can invoke and run at least one computer program in a memory to implement the method in the implementation of the present disclosure.

In an implementation, as illustrated in FIG. 6, the communication device 600 further includes a memory 620. The processor 610 can invoke and run the computer program in the memory 620 to implement the method in the implementation of the present disclosure.

The memory 620 may be a single device independent of the processor 610, and may also be integrated in the processor 610.

In an implementation, as illustrated in FIG. 6, the communication device 600 may further include a transceiver 630. The processor 610 can control the transceiver 630 to communication with other devices, for example, to transmit information or data to the other devices or receive information or data from the other devices.

In an implementation, the transceiver 630 may include a transmitter and a receiver. The transceiver 630 may further include one or more antennas.

The communication device 600 may be the network device in the implementations of the present disclosure, and the communication device 600 can implement corresponding procedures realized by the network device in the methods in the implementations of the present disclosure, which will not be repeated herein for simplicity.

The communication device 600 may be the mobile terminal/terminal in the implementations of the present disclosure, and the communication device 600 can implement corresponding procedures realized by the mobile terminal/terminal in the implementations of the present disclosure, which will not be repeated herein for simplicity.

FIG. 7 is a schematic structural diagram illustrating a chip according to an implementation of the present disclosure. The chip 700 illustrated in FIG. 7 includes a processor 710. The processor 710 can invoke and run at least one computer program stored in a memory to implement the methods in the implementation of the present disclosure.

In an implementation, as illustrated in FIG. 7, the chip 700 further includes a memory 720. The processor 710 can invoke and run at least one computer program stored in the memory 720 to implement the methods in the implementations of the present disclosure.

The memory 720 may be a single device independent of the processor 710, and may also be integrated in the processor 710.

In an implementation, the chip 700 may further include an input interface 730. The processor 710 can control the input interface 730 to communication with other devices or chips, for example, to receive information or data from the other devices or chips.

In an implementation, the chip 700 may further include an output interface 740. The processor 710 can control the output interface 740 to communication with other devices or chips, for example, to output information or data to the other devices or chips.

The chip can be applied to the network device in the implementations of the present disclosure, and the chip can implement corresponding procedures realized by the network device in the methods in the implementations of the present disclosure, which will not be repeated herein for simplicity.

The chip can be applied to the mobile terminal/terminal in the implementations of the present disclosure, and the chip can implement corresponding procedures realized by the mobile terminal/terminal in the methods in the implementations of the present disclosure, which will not be repeated herein for simplicity.

It is to be understood that the chip referred in the implementation of the present disclosure may also be referred to as a system-level chip, a system chip, a chip system, a system-on chip, or the like.

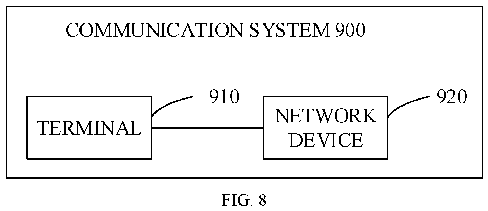

FIG. 8 is a schematic block diagram illustrating a communication system 900 according to an implementation of the present disclosure. As illustrated in FIG. 8, the communication system 900 includes a terminal 910 and a network device 920.

The terminal device 910 can be used to implement corresponding functions realized by the terminal in the above method, and the network device 920 can be used to implement corresponding functions realized by the network device in the above method, which will not be repeated herein for simplicity.

It is to be understood that the processor in the implementation of the present disclosure may be an integrated circuit chip with signal processing capability. In the implementation process, the steps of the foregoing method implementations can be completed by hardware integrated logic circuits in the processor or instructions in the form of software. The above-mentioned processor may be a general-purpose processor, a digital signal processor (DSP), an application specific integrated circuit (ASIC), a field programmable gate array (FPGA) or other programming logic devices, discrete gates or transistor logic devices, or discrete hardware components. The methods, steps, and logical block diagrams disclosed in the implementations of the present disclosure can be implemented or executed. The general-purpose processor may be a microprocessor or the processor may also be any conventional processor or the like. The steps of the methods disclosed in the implementations of the present disclosure can be directly executed and completed by a hardware decoding processor, or executed and completed by a combination of hardware and software modules in the decoding processor. The software modules can be located in a mature storage medium in the field such as a random access memory, a flash memory, a read-only memory, a programmable read-only memory, an electrically erasable programmable memory, or a register. The storage medium is located in the memory, and the processor reads information in the memory and completes the steps of the above methods in combination with its hardware.

It can be understood that the memory may be a volatile memory or a non-volatile memory, and may also include both the volatile memory and non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM) and used for external high-speed cache. By way of examples rather than limitation, various random access memories can be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synclink dynamic random access memory (SLDRAM), and a direct rambus random access memory (DR RAM). It is to be noted that the memory described in the system and method in this specification is intended to include but is not limited to these and any other suitable types of memories.

It is to be noted that the above memories are exemplary but not used for limitation. For example, the memory in the implementation of the present disclosure may also be an SRAM, a DRAM, an SDRAM, a DDR SDRAM, an ESDRAM, an SLDRAM, and a DR RAM. That is, the memory described in the implementation of the present disclosure is intended to include but is not limited to these and any other suitable types of memories.

Implementations of the present disclosure further provide a computer-readable storage medium configured to store at least one computer program.

In an implementation, the computer-readable storage medium can be applied to the network device in the implementations of the present disclosure, and the computer program enables a computer to execute corresponding procedures realized by the network device in the above methods in the implementations of the present disclosure, which will not be repeated herein for simplicity.

In an implementation, the computer-readable storage medium can be applied to the mobile terminal/terminal in the implementations of the present disclosure, and the computer program enables the computer to execute corresponding procedures realized by the mobile terminal/terminal in the above methods in the implementations of the present disclosure, which will not be repeated herein for simplicity.

Implementations of the present disclosure further provide a computer program product which includes at least one computer program instruction.

In an implementation, the computer program product can be applied to the network device in the implementations of the present disclosure, and the computer program instruction enables the computer to execute corresponding procedures realized by the network device in the above methods in the implementations of the present disclosure, which will not be repeated herein for simplicity.

In an implementation, the computer program product can be applied to the mobile terminal/terminal in the implementations of the present disclosure, and the computer program instruction enables the computer to execute corresponding procedures realized by the mobile terminal/terminal in the above methods in the implementations of the present disclosure, which will not be repeated herein for simplicity.

Implementations of the present disclosure further provide a computer program.

In an implementation, the computer program can be applied to the network device in the implementations of the present disclosure, and the computer program, when run in the computer, enables the computer to execute corresponding procedures realized by the network device in the above methods in the implementations of the present disclosure, which will not be repeated herein for simplicity.

In an implementation, the computer program can be applied to the mobile terminal/terminal in the implementations of the present disclosure, and the computer program, when run in the computer, enables the computer to execute corresponding procedures realized by the mobile terminal/terminal in the above methods in the implementations of the present disclosure, which will not be repeated herein for simplicity.

Those of ordinary skill in the art will appreciate that units and algorithmic operations of various examples described in connection with the implementations herein can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It will be evident to those skilled in the art that, for the sake of convenience and simplicity, in terms of the working processes of the foregoing systems, apparatuses, and units, reference can be made to the corresponding processes of the above method implementations, which will not be repeated herein.

According to the several implementations provided in the present disclosure, it will be appreciated that the systems, apparatuses, and methods disclosed in implementations herein may also be implemented in various other manners. For example, the above apparatus implementations are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interfaces, devices or units, and may be electrical coupling, mechanical coupling, or the like.

Separated units as illustrated may or may not be physically separated. Components or parts displayed as units may or may not be physical units, and may reside at one location or may be distributed to multiple networked units. Some of or all the units may be selectively adopted according to practical needs to achieve objectives of the solutions of the present disclosure.

In addition, the functional units in the various implementations of the present disclosure may be integrated into one processing unit, or each unit may exist alone physically, or two or more units may be integrated into one unit.

If the integrated units are implemented as software functional units and sold or used as standalone products, they may be stored in a computer readable storage medium. Based on such an understanding, the essential technical solution, or the portion that contributes to the relate art, or part of the technical solution of the present disclosure may be embodied as software products. The computer software products can be stored in a storage medium and may include multiple instructions that, when executed, can cause a computing device, e.g., a personal computer, a server, a network device, etc., to execute some of or all operations of the methods described in various implementations of the present disclosure. The above storage medium may include various kinds of media that can store program codes, such as a universal serial bus (USB) flash disk, a mobile hard drive, an ROM, an RAM, an RAM, a magnetic disk, or an optical disk.

The above are only specific implementations of the present disclosure, and the protection scope of the present disclosure is not limited to this. Any person skilled in the art can easily think of changes or substitutions within the technical scope disclosed in the present disclosure, and these changes or substitutions shall fall within the protection scope of the present disclosure. Therefore, the protection scope of the present disclosure shall be subject to the protection scope of the claims.

## Claims

1. A processing method for a security algorithm, comprising:
performing, by a terminal, cell search, and selecting, by the terminal, a cell supporting a first security algorithm as a target cell from found cells, wherein the first security algorithm is a security algorithm used by the terminal before radio resource control (RRC) connection re-establishment or RRC connection recovery; and
performing, by the terminal, an RRC connection re-establishment procedure or an RRC connection recovery procedure between the terminal and the target cell.

2. The method of claim 1, further comprising:
for each of at least one cell, obtaining, by the terminal, a security algorithm list supported by the cell from a system broadcast message of the cell, wherein the security algorithm list contains at least one security algorithm support by the cell.

3. The method of claim 1 or 2, wherein performing, by the terminal, the RRC connection re-establishment procedure between the terminal and the target cell comprises:
transmitting, by the terminal, an RRC connection re-establishment request message to the target cell;
receiving, by the terminal, an RRC connection re-establishment message from the target cell, wherein the RRC connection re-establishment message has been subjected to integrity protection performed with the first security algorithm and a secret key updated by the target cell; and
transmitting, by the terminal, an RRC connection re-establishment completion message to the target cell.

4. The method of claim 3, wherein
the RRC connection re-establishment message carries first next hop chaining count (NCC) information, wherein the first NCC information is used by the terminal to update a secret key;
the method further comprises:
performing, by the terminal, integrity protection and encryption on the RRC connection re-establishment completion message with the first security algorithm and the secret key updated by the terminal.

5. The method of claim 1 or 2, wherein performing, by the terminal, the RRC connection recovery procedure between the terminal and the target cell comprises:
transmitting, by the terminal, an RRC connection recovery request message to the target cell;
receiving, by the terminal, an RRC connection recovery message from the target cell, wherein the RRC connection recovery message has been subjected to integrity protection and encryption performed with the first security algorithm and a secret key updated by the target cell; and
transmitting, by the terminal, an RRC connection recovery completion message to the target cell.

6. The method of claim 5, wherein
the RRC connection recovery message carries second NCC information, wherein the second NCC information is used by the terminal to update a secret key;
the method further comprises:
performing, by the terminal, integrity protection and encryption on the RRC connection recovery completion message with the first security algorithm and the secret key updated by the terminal.

7. A processing method for a security algorithm, comprising:
performing, by a terminal, cell search, and selecting, by the terminal, a target cell;
transmitting, by the terminal, a radio resource control (RRC) connection re-establishment request message to the target cell;
receiving, by the terminal, an RRC connection re-establishment message from the target cell, and determining, by the terminal, whether the RRC connection re-establishment message carries configuration information of a second security algorithm; and
transmitting, by the terminal, an RRC connection recovery completion message to the target cell via the second security algorithm, in response to the RRC connection re-establishment message carrying the configuration information of the second security algorithm.

8. The method of claim 7, wherein
the target cell makes the RRC connection re-establishment message carry the configuration information of the second security algorithm, on condition that the target cell does not support a first security algorithm; and
the first security algorithm is a security algorithm used by the terminal before RRC connection re-establishment, and the second security algorithm is a security algorithm supported by the target cell.

9. The method of claim 7, wherein
the target cell makes the RRC connection re-establishment message not carry the configuration information of the second security algorithm or carry the configuration information of the second security algorithm, on condition that the target cell supports a first security algorithm; and
the first security algorithm is a security algorithm used by the terminal before RRC connection re-establishment, and the second security algorithm is a security algorithm supported by the target cell.

10. The method of any of claims 7 to 9, wherein
the RRC connection re-establishment message has been subjected to integrity protection performed with the second security algorithm and a secret key updated by the target cell, on condition that the RRC connection re-establishment message carries the configuration information of the second security algorithm.

11. The method of any of claims 7 to 10, wherein the RRC connection re-establishment message carries first next hop chaining count (NCC) information, wherein the first NCC information is used by the terminal to update a secret key; the method further comprises:
performing, by the terminal, integrity protection and encryption on the RRC connection re-establishment completion message with the second security algorithm and the secret key updated by the terminal, in response to the RRC connection re-establishment message carrying the configuration information of the second security algorithm.

12. The method of any of claims 7 to 11, further comprising:
transmitting, by the terminal, the RRC connection recovery completion message to the target cell via a first security algorithm, in response to the RRC connection re-establishment message not carrying the configuration information of the second security algorithm, wherein the first security algorithm is a security algorithm used by the terminal before RRC connection re-establishment.

13. The method of claim 12, wherein
the RRC connection re-establishment message carries first NCC information, wherein the first NCC information is used by the terminal to update a secret key; and
the method further comprises:
performing, by the terminal, integrity protection and encryption on the RRC connection re-establishment completion message with the first security algorithm and the secret key updated by the terminal, in response to the RRC connection re-establishment message not carrying the configuration information of the second security algorithm.

14. A processing apparatus for a security algorithm, comprising:
a searching unit configured to perform cell search and select a cell supporting a first security algorithm as a target cell from found cells, wherein the first security algorithm is a security algorithm used by a terminal before radio resource control (RRC) connection re-establishment or RRC connection recovery; and
an RRC unit configured to perform an RRC connection re-establishment procedure or an RRC connection recovery procedure between the terminal and the target cell.

15. The apparatus of claim 14, further comprising:
an obtaining unit configured to obtain, for each of at least one cell, a security algorithm list supported by the cell from a system broadcast message of the cell, wherein the security algorithm list contains at least one security algorithm support by the cell.

16. The apparatus of claim 14 or 15, wherein the RRC unit is configured to:
transmit an RRC connection re-establishment request message to the target cell;
receive an RRC connection re-establishment message from the target cell, wherein the RRC connection re-establishment message has been subjected to integrity protection performed with the first security algorithm and a secret key updated by the target cell; and
transmit an RRC connection re-establishment completion message to the target cell.

17. The apparatus of claim 16, wherein
the RRC connection re-establishment message carries first next hop chaining count (NCC) information, wherein the first NCC information is used by the terminal to update a secret key; and
integrity protection and encryption on the RRC connection re-establishment completion message are performed with the first security algorithm and the secret key updated by the terminal.

18. The apparatus of claim 14 or 15, wherein the RRC unit is configured to:
transmit an RRC connection recovery request message to the target cell;
receive an RRC connection recovery message from the target cell, wherein the RRC connection recovery message has been subjected to integrity protection and encryption performed with the first security algorithm and a secret key updated by the target cell; and
transmit an RRC connection recovery completion message to the target cell.

19. The apparatus of claim 18, wherein
the RRC connection recovery message carries second NCC information, wherein the second NCC information is used by the terminal to update a secret key;
integrity protection and encryption on the RRC connection recovery completion message is performed with the first security algorithm and the secret key updated by the terminal.

20. A processing apparatus for a security algorithm, comprising:
a searching unit configured to perform cell search and select a target cell; and
a radio resource control (RRC) unit configured to:
transmit an RRC connection re-establishment request message to the target cell;
receive an RRC connection re-establishment message from the target cell;
determine whether the RRC connection re-establishment message carries configuration information of a second security algorithm; and
transmit an RRC connection recovery completion message to the target cell via the second security algorithm, in response to the RRC connection re-establishment message carrying the configuration information of the second security algorithm.

21. The apparatus of claim 20, wherein
the target cell makes the RRC connection re-establishment message carry the configuration information of the second security algorithm, on condition that the target cell does not support a first security algorithm; and
the first security algorithm is a security algorithm used by the terminal before RRC connection re-establishment, and the second security algorithm is a security algorithm supported by the target cell.

22. The apparatus of claim 20, wherein
the target cell makes the RRC connection re-establishment message not carry the configuration information of the second security algorithm or carry the configuration information of the second security algorithm, on condition that the target cell supports the first security algorithm; and
the first security algorithm is a security algorithm used by the terminal before RRC connection re-establishment, and the second security algorithm is a security algorithm supported by the target cell.

23. The apparatus of any of claims 20 to 22, wherein
the RRC connection re-establishment message has been subjected to integrity protection performed with the second security algorithm and a secret key updated by the target cell, on condition that the RRC connection re-establishment message carries the configuration information of the second security algorithm

24. The apparatus of any of claims 20 to 23, wherein
the RRC connection re-establishment message carries first next hop chaining count (NCC) information, wherein the first NCC information is used by the terminal to update a secret key;
integrity protection and encryption on the RRC connection re-establishment completion message are performed with the second security algorithm and the secret key updated by the terminal, in response to the RRC connection re-establishment message carrying the configuration information of the second security algorithm.

25. The apparatus of any of claims 20 to 24, wherein
the RRC unit is configured to transmit the RRC connection recovery completion message to the target cell via a first security algorithm, in response to the RRC connection re-establishment message not carrying the configuration information of the second security algorithm, wherein the first security algorithm is a security algorithm used by the terminal before RRC connection re-establishment.

26. The apparatus of claim 25, wherein
the RRC connection re-establishment message carries first NCC information, wherein the first NCC information is used by the terminal to update a secret key; and
integrity protection and encryption on the RRC connection re-establishment completion message are performed with the first security algorithm and the secret key updated by the terminal, in response to the RRC connection re-establishment message not carrying the configuration information of the second security algorithm.

27. A terminal comprising:
a processor; and
a memory configured to store at least one computer program;
the processor being configured to invoke and run the at least one computer program in the memory to perform the method of any of claims 1 to 6 or the method of any of claims 7 to 13.

28. A chip comprising:
a processor configured to invoke and run at least one computer program in a memory to enable a device equipped with the chip to perform the method of any of claims 1 to 6 or the method of any of claims 7 to 13.

29. A computer-readable storage medium configured to store at least one computer program, the at least one computer program enabling a computer to perform the method of any of claims 1 to 6 or the method of any of claims 7 to 13.

30. A computer program product comprising at least one computer program instruction, the at least one computer program instruction enabling a computer to perform the method of any of claims 1 to 6 or the method of any of claims 7 to 13.

31. A computer program, the computer program enabling a computer to perform the method of any of claims 1 to 6 or the method of any of claims 7 to 13.
